Europäisches Patentamt

European Patent Office

Office européen des brevets

(11) Veröffentlichungsnummer: **0 276 363 B1**

# EUROPÄISCHE PATENTSCHRIFT

(45) Veröffentlichungstag der Patentschrift: **17.04.91**

(51) Int. Cl.⁵: **B01D 53/34**

(21) Anmeldenummer: 87112393.1

(22) Anmeldetag: 26.08.87

(54) Verfahren zum Entschwefeln von Rauchgasen.

(30) Priorität: 28.01.87 DE 3702414

(43) Veröffentlichungstag der Anmeldung:
03.08.88 Patentblatt 88/31

(45) Bekanntmachung des Hinweises auf die
Patenterteilung:
17.04.91 Patentblatt 91/16

(84) Benannte Vertragsstaaten:
AT DE FR NL SE

(56) Entgegenhaltungen:
EP-A- 0 123 856
DE-A- 1 769 459

(73) Patentinhaber: Deutsche Babcock Energie-
und Umwelttechnik Aktiengesellschaft
Postfach 10 03 47-48
W-4200 Oberhausen 1(DE)

(72) Erfinder: Matten, Johannes
Greifenwalder Strasse 10
W-4200 Oberhausen 11(DE)
Erfinder: Wigand, Peter
Marktbreiter Strasse 60
W-8703 Ochsenfurt(DE)

(74) Vertreter: Müller, Jürgen, Dipl.-Ing.
Deutsche Babcock AG Lizenz-und Patentabteilung Duisburger Strasse 375
W-4200 Oberhausen 1(DE)

## Beschreibung

Die Erfindung betrifft ein Verfahren zum Entschwefeln von Rauchgasen mit Hilfe eines Additives nach dem Oberbegriff des Anspruches 1.

Als Additiv für die Entschwefelung von Rauchgasen nach dem Additiv-Verfahren (Staub-Reinhalt. Luft 28 (1968) Nr. 3, Seiten 95 bis 98) wird unter anderem feingemahlener Kalkstein in einer Körnung von 75 bis 90 % unter 90 mm und mit einer spezifischen Oberfläche von 4 000 bis 8 000 $cm^2/g$ verwendet. Die Bereitstellung eines solchen Additives verteuert die Entschwefelung des Rauchgases.

Bei der Herstellung von Zucker aus Zuckerrüben wird der durch Auslaugung der Rübenschnitzel gewonnene Rohsaft mit Hilfe von Kalkhydrat und Kohlendioxid behandelt. Dabei fallen gereinigter Dünnsaft und Scheideschlamm an, der Kalziumhydroxit, Kohlendioxid und die organischen Nichtzuckerbestandteile der Zuckerrüben enthält. Dieser Schlamm ist ein Abfallprodukt und als Düngemittel bedingt verwendbar. Die Zuckerherstellung erfordert ferner Prozeßdampf, der in einem Kessel gewonnen wird.

Der Erfindung liegt die Aufgabe zugrunde, ein Verfahren zur Entschwefelung von Rauchgasen bereitzustellen, das als Additiv einen billigen Rohstoff verwenden kann.

Diese Aufgabe wird bei einem gattungsgemäßen Verfahren erfindungsgemäß durch die kennzeichnenden Merkmale des Anspruches 1 gelöst. Vorteilhafte Ausgestaltungen der Erfindung sind in den Unteransprüchen angegeben.

Es hatte sich überraschend gezeigt, daß der bei der Zuckerherstellung anfallende Scheideschlamm ein ausgezeichnetes Additiv für die Rauchgasentschwefelung darstellt, wenn er in der Schwebe in einem Stromtrockner auf eine Restfeuchte von 1 % getrocknet wird. In diesem Zustand ist der getrocknete Scheideschlamm gut fließfähig und weist eine große spezifische Oberfläche von mehr als 5 000 $cm^2/g$ auf.

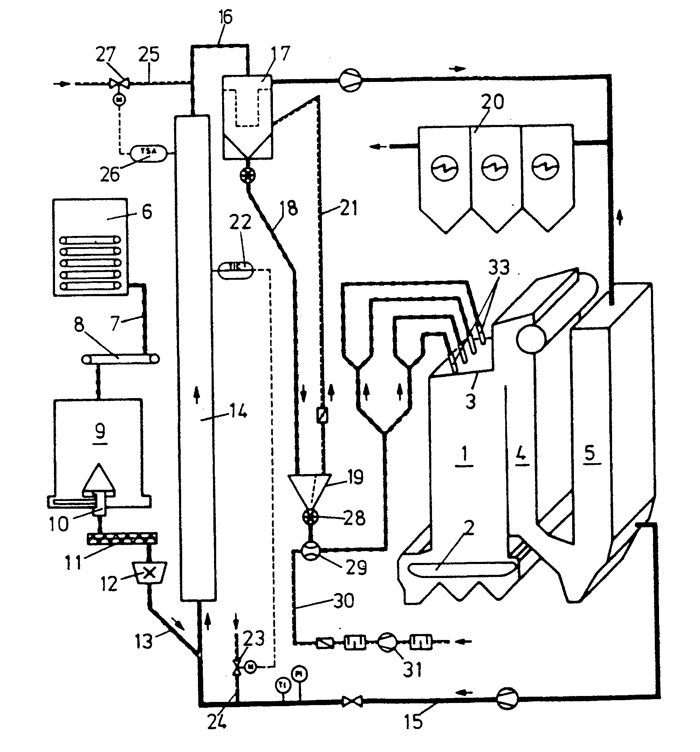

Die Erfindung wird an einem Ausführungsbeispiel und anhand der Zeichnung im folgenden näher erläutert. Die Zeichnung stellt das Schema für die Durchführung eines Verfahrens zur Entschwefelung von Rauchgasen gemäß der Erfindung dar.

Ein mit Kohle gefeuerter Kessel für die Erzeugung von Prozeßdampf in einer Zuckerfabrik enthält einen Feuerraum 1 oberhalb eines Feuerungsrostes 2. Der Feuerraum 1 ist durch eine Kesseldecke 3 geschlossen. An den Feuerraum 1 schließen sich ein zweiter und ein dritter mit Nachschaltheizflächen versehener Rauchgaszug 4, 5 an.

Die Entschwefelung der Rauchgase des Kessels erfolgt nach dem Additiv-Verfahren mit Hilfe von bei der Zuckerherstellung anfallendem Scheideschlamm. Dieser Scheideschlamm besteht aus Kalziumhydroxid, Kohlendioxid und den organischen Nichtzuckerbestandteilen aus den Zuckerrüben. Der Scheideschlamm ist in einer Filterpresse 6 auf einen maximalen Feuchtigkeitsgehalt von 30 % gebracht. In diesem Zustand ist der Scheideschlamm klumpig und nicht mehr frei fließend.

Die Filterpresse 6 ist über eine Leitung 7 und einen Förderer 8 mit einem Vorratsbunker 9 verbunden. Der Vorratsbunker 9 ist mit einer kontinuierlichen Austragsvorrichtung 10 versehen, die gleichzeitig als Dosiereinrichtung dient. Durch eine stufenlose Drehzahlveränderung ist eine dosierte Materialzuteilung bis maximal 2 t/h möglich. Die Austragsvorrichtung 10 ist über einen Querförderer 11 mit einem Zerkleinerer 12 verbunden, in dem die feuchten Klumpen des Scheideschlammes zerkleinert werden, um eine sich anschließende Trocknung in ausreichender Weise sicherzustellen.

Über eine Feststoffleitung 13 ist der Zerkleinerer 12 mit einem Stromtrockner 14 verbunden, in dem der Scheideschlamm mit Hilfe von Rauchgas von einer Temperatur von etwa 370 Grad C in der Schwebe getrocknet wird. Das Rauchgas wird dem Kessel über eine Rauchgasleitung 15 entnommen, die an den Kessel zwischen dem zweiten und dem dritten Rauchgaszug 4, 5 angeschlossen ist.

Der Scheideschlamm und das Rauchgas werden in den unteren Teil des Stromtrockners 14 eingeführt. Das oben liegende Austragsende des Stromtrockners 14 ist über eine Gemischleitung 16 mit einem Abscheider 17, vorzugsweise einem Schlauchfilter verbunden. Der Abscheider 17 und der Stromtrockner 14 sind von einer Isolierung umgeben. Der Feststoffaustrag des Abscheiders 17 ist über eine Schurre 18 mit einem Einlaufkasten 19 verbunden. Der gasseitige Austrag des Abscheiders 17 ist zu der Filteranlage 20 des Kessels geführt. Zwischen dem Einlaufkasten 19 und dem Abscheider 17 ist eine Abluft führende Leitung 2l vorgesehen, um einen Druckausgleich herbeizuführen.

Der Trocknungsprozeß des Scheideschlammes wird so eingestellt, daß am Austrag des Stromtrockners 14 vor dem Eintritt in den Abscheider eine Temperatur in dem Gemisch aus getrocknetem Scheideschlamm und Rauchgas von etwa 80 Grad C herrscht. Bei dieser Temperatur weist der getrocknete Scheideschlamm eine Restfeuchte von 1 % auf. Das so getrocknete Material ist frei fließend und hat eine große spezifische Oberfläche von 5 000 $cm^2/g$. Zur Einhaltung der Trocknungstemperatur von 80 Grad C vor dem Abscheider dient ein Regelkreis 22, der auf eine Ansaugklappe 23 wirkt. Die Ansaugklappe 23 liegt in einer mit der Rauchgasleitung 15 verbundenen Ansaugeleitung 24, über die im Bedarfsfalle Falschluft angesaugt wird. Zum Schutz des als Abscheider 17 dienenden Schlauchfilters ist eine zweite Ansaugeleitung 25 vorgesehen, die in die Gemischleitung 16 mündet. Ein Regelkreis 26, der auf eine in der zweiten Ansaugeleitung 26 liegende Ansaugeklappe 27 wirkt, bewirkt ein Ansaugen von Falschluft, sobald die Temperatur vor dem Abscheider einen Wert von 120 Grad C übersteigt.

Der getrocknete Scheideschlamm wird pneumätisch in den Feuerraum 1 des Kessels eingeblasen. Zu diesem Zweck ist der Einlaufkasten 19 mit einer Zellenradschleuse 28 versehen, die mit einem Durchblasezuteiler 29 verbunden ist. Diese Zellenradschleuse 28 hat ebenso wie die Zellenradscheuse am Austrag des Abscheiders 17 lediglich eine Abdichtfunktion zu erfüllen. An den Durchblasezuteiler 29 ist eine Luftleitung 30 angeschlossen, in der ein Ventilator 31 angeordnet ist. Die von dem Ventilator 31 geförderte Luft bläst den getrockneten Scheideschlamm über eine verzweigte Förderleitung zu Einblasstellen 33. Diese Einblasstellen 33 sind in der Kesseldecke 3 angeordnet. In dem Feuerraum 1 herrschen im Bereich der Kesseldecke 3 Rauchgastemperaturen von 850 bis 900 Grad C, die für die Entschwefelung günstig sind. Mit Hilfe des beschriebenen Entschwefelungsverfahrens läßt sich der zulässige Schwefelemissionsgrad mit Sicherheit unterschreiten.

## Ansprüche

1. Verfahren zum Entschwefeln von in einem Kessel erzeugten Rauchgasen mit Hilfe eines trockenen kalziumkarbonathaltigen Additives, das in den Feuerraum des Kessels eingeblasen wird, dadurch gekennzeichnet, daß als Additiv der bei der Zuckerherstellung anfallende, aus Kalziumhydroxid, Kohlendioxid und organischen Bestandteilen bestehende Scheideschlamm verwendet wird, daß der Scheideschlamm zerkleinert und in einem Stromtrockner mit Rauchgas aus dem Kessel getrocknet wird und daß der getrocknete Scheideschlamm in einem Abscheider aus dem Rauchgas abgetrennt und mit Luft zu mehreren in den Feuerraum des Kessels mündenden Einblasstellen gefördert wird.

2. Verfahren nach Anspruch 1, dadurch gekennzeichnet, daß die Trocknung des Scheideschlammes mit Rauchgasen von max. 400 Grad C, vorzugsweise von 370 Grad C durchgeführt wird.

3. Verfahren nach Anspruch 1 oder 2, dadurch gekennzeichnet, daß die Temperatur des Rauchgases nach dem Trocknen und vor dem Abscheiden des getrockneten Scheideschlamms auf 80 Grad C eingestellt wird.

4. Verfahren nach Anspruch 3, dadurch gekennzeichnet, daß zur Einhaltung der Temperatur vor dem Abscheiden Falschluft angesaugt wird.

5. Verfahren nach einem der Ansprüche 1 bis 4, dadurch gekennzeichnet, daß zur Einhaltung der Temperatur während des Trocknens dem Rauchgas Luft aus der Umgebung zugemischt wird.

## Claims

1. Method for desulphurising flue gases, which have been produced in a boiler, with the aid of a dry additive which contains calcium carbonate and is blown into the fire box of the boiler, characterised thereby, that the defecation sum, which arises in the production of sugar and consists of calcium hydroxide, carbon dioxide and organic components, is used as additive, that the defecation scum is comminuted and dried in a flow drier with flue gas from the boiler and that the dried defecation scum is separated from the flue gas in a separator and conveyed with air to several injectors opening into the fire box of the boiler.

2. Method according to claim 1, characterised thereby, that the drying of the defecation scum is carried out with flue gases at at most 400° C, preferably at 370° C.

3. Method according to claim 1 or 2, characterised thereby, that the temperature of the flue gas after the drying and before the separating of the dried defecation scum is adjusted to 80° C.

4. Method according to claim 3, characterised thereby, that additional air is inducted before the separation for the maintenance of the temperature.

5. Method according to one of the claims 1 to 4, characterised thereby, that air from the environment is admixed during the drying of the flue gas for the maintenance of the temperature.

## Revendications

1. Procédé de désulfuration de gaz de fumées produits dans une chaudière, à l'aide d'un additif sec contenant du carbonate de calcium, qui est insufflé dans la chambre de combustion de la chaudière, caractérisé en ce que l'on utilise comme additif de la boue de clarification se composant d'hydroxyde de calcium, de dioxyde de carbone et de composants organiques, la boue de clarification étant broyée et séchée à l'aide des gaz de fumées provenant de la chaudière, dans un sécheur à courant, et que la boue de clarification séchée est séparée des gaz de fumées dans un séparateur et véhiculé à l'aide d'air vers plusieurs points d'insufflation débouchant dans la chambre de combustion de la chaudière.

2. Procédé selon la revendication 1, caractérisé en ce que le séchage de la boue de clarification est effectué à l'aide des gaz de fumées à une température maximale de 400°C, de préférence de 370°C.

3. Procédé selon la revendication 1 ou 2, caractérisé en ce que la température des gaz de fumées après séchage et avant séparation de la boue de clarification séchée est réglée à 80°C.

4. Procédé selon la revendication 3, caractérisé en ce que de l'air secondaire est aspiré en vue de maintenir la température avant séparation.

5. Procédé selon l'une des revendications 1 à 4, caractérisé en ce que de l'air ambiant est ajouté aux gaz de fumées en vue de maintenir la température pendant le séchage.